# EUROPEAN PATENT SPECIFICATION

(11) **EP 2 783 914 B1**
(45) Date of publication and mention of the grant of the patent: **01.03.2017**
(21) Application number: 14161405.7
(22) Date of filing: 25.03.2014
(51) Int. Cl.: B60P 3/42, B60J 5/04

(54) **Trailer and method for securing suspended goods therein**
Trailer und Verfahren zur Sicherung von aufgehängte Waren
Remorque et procédé de sécurisation des marchandises suspendée dans celui-ci

(30) Priority: 26.03.2013 BE 201300207
(43) Date of publication of application: 01.10.2014
(73) Proprietor: VAN HOOL, naamloze vennootschap, 2500 Lier (BE)
(72) Inventor: Noppen, Jan, 2500 Lier (Koningshooikt) (BE); Van Haaren, Jan, 2500 Lier (Koningshooikt) (BE)
(74) Representative: Brantsandpatents bvba

(56) References cited:
- DE-A1- 3 711 832
- DE-U1- 7 800 399
- FR-A1- 2 777 550
- GB-A- 2 090 798
- GB-A- 2 294 437
- JP-A- S6 185 221

## Description

### TECHNICAL FIELD

The present invention relates to a trailer and a method for securing suspended goods therein.

### BACKGROUND

It is known for piece goods to be transported from a production environment to an assembly environment, with said piece goods being suspended in a transporting means by means of loading wagons. One or more piece goods can be loaded into these loading wagons in the production environment and then unloaded from the transporting means and from the loading wagons after they have been transported to the assembly environment. Belgian patent application BE2012/0005, which has been filed but not yet published, relates to a method and a device from the prior art of such a logistical system for transporting piece goods. Further GB2294437 also discloses a system for transporting piece goods.

One of the problems with the known transporting means for suspending and transporting piece goods is that the space in the transporting means is not used in an optimum manner. Problems also frequently arise when the piece goods are nested in the transporting means, with the piece goods colliding with one another or hitting the walls of the transporting means. The friction which is associated with this, or forcing piece goods into the space of the transporting means, can lead to scratches or irreparable damage to the piece goods. When these problems arise, it is necessary to intervene manually, which is not evident, for example, deep inside the transporting means. This also causes a considerable loss of time. Another problem is the large weight of the transporting means itself.

Document DE7800399(U1) discloses an example from the prior art of a transporting means having pivotable walls. A problem with a transporting means of this type is that it is not adapted to the demands of transporting piece goods. Piece goods which are loaded in the conventional way may shift and collide with one another or with the hard walls of the transporting means. Piece goods are also difficult to stack, due to their often irregular shape.

It is an object of the present invention to provide an improved transporting means, which offers a solution to at least one of the above-mentioned drawbacks of suspending and transporting piece goods, as described in Claim 1.

### SUMMARY OF THE INVENTION

The invention relates in particular to a trailer for transporting piece goods, which trailer is provided with a roof and two side walls, which side walls are provided with a tarpaulin and which side walls comprise a side wall structure, wherein a suspension system is provided on the roof or on a side wall, which suspension system is suitable for suspending piece goods and for shifting said goods in the longitudinal direction of the trailer, as described in Claim 1.

By providing a trailer with such a suspension system, a lighter transporting means with flexible side walls is possible, which is safer in case of possible collision of the suspended piece goods with these side walls. It is also easier to access, for example, in order to assess problems with piece goods and/or to intervene manually.

In a preferred embodiment of the invention, the side wall structures are provided with a securing system for securing the piece goods, as described in Claim 2. This provides extra stability to the suspended piece goods, which greatly reduces swinging and collisions and the damage resulting from this.

A second aspect of the invention relates to a method for securing suspended piece goods in a trailer, as described in Claim 15.

Further preferred embodiments are described in the subclaims.

### DESCRIPTION OF THE FIGURES

The following figures show preferred embodiments of the invention.
Figure 1 shows a bird's-eye view of an unloaded trailer in unsecured position.
Figures 2 and 3 show a rear view of a trailer in unsecured position.
Figure 4 shows a rear view of a trailer in unsecured position, loaded with piece goods.
Figure 5 shows a bird's-eye view of a trailer in secured position, loaded with piece goods.
Figure 6 shows a bird's-eye view of a trailer in secured position, loaded with boxes and crates on pallets.
Figure 7 diagrammatically shows a cross-sectional view perpendicular to the longitudinal axis of the trailer.
Figure 8 shows a loading wagon with stored piece goods.
Figure 9 diagrammatically shows a cross-sectional view along the longitudinal axis of a trailer.
Figure 10 shows a universal loading wagon with stored piece goods.

### DETAILED DESCRIPTION

The invention is described below by means of non-limiting examples which illustrate the invention and which are not intended to limit the scope of the invention or should not be interpreted in this way.

A first aspect of the present invention relates to a trailer for transporting piece goods, which trailer is provided with a roof and two side walls, which side walls are provided with a tarpaulin and which side walls comprise a side wall structure, wherein a suspension system is provided on the roof or on a side wall, which suspension system is suitable for suspending piece goods and for shifting said goods in the longitudinal direction of the trailer.

In the present invention, the term "trailer" is understood to mean a trailer, truck, semitrailer, curtainsider trailer or side curtain- trailer which is provided with tarpaulin, for example, on the side walls. By providing a trailer with a suspension system, a lighter transporting means with flexible side walls is possible, which is safer in case of collision of the suspended piece goods with these side walls. By using shiftable tarpaulin (side curtains), it is also possible to access the transporting means in a simpler and smoother manner, for example, in order to assess problems with piece goods and/or to intervene manually.

In a preferred embodiment, one or both side wall structures are provided with a securing system for securing the piece goods. A securing system on one or both side wall structures provides extra stability to the suspended piece goods, which greatly reduces swinging and collisions and the damage resulting from this.

In a preferred embodiment, the trailer describes a volume which is variable as a result of the displaceable bearing of one or both side wall structures. This offers the advantage that the trailer has a greater volume during loading or unloading of the trailer than during transport. In this way, loading and unloading piece goods into and out of the trailer becomes smoother and safer, in order not to damage the components. This also offers the advantage of better and safer securing of piece goods in case of a smaller volume of the trailer.

In a preferred embodiment, one or both side wall structures are hingeably beared on the roof of the trailer.

In the present invention, the term "hingeable" is understood to mean that a side wall structure is coupled to the roof and/or to the chassis by means of a fixing system which concerns a hinged system.

Hinging the side wall structures also makes it possible to inspect the space of the trailer in a simple and smooth manner for problems with the suspended piece goods and to possibly intervene manually.

In an alternative preferred embodiment, one or both side wall structures are shiftably beared on the roof and/or on the chassis of the trailer. This alternative offers similar advantages.

In the present invention, the term "shiftable" is understood to mean that, for example, a side wall structure and the roof (or the chassis) are coupled to one another by means of a fixing system which concerns a shiftable system. An example thereof is a system of telescopic tubes. In the present invention, the term "telescopic tubes" is understood to mean a number of hollow tubes, sleeves or profiles which fit into one another and which can be shifted into and out of one another by either manual or driven means, e.g. hydraulically, pneumatically or electrically.

In another preferred embodiment, one or both side wall structures are hingeably beared on the chassis of the trailer. This represents an alternative preferred embodiment of the invention.

In a preferred embodiment, a side wall structure comprises side posts which divide the side wall into side wall segments. This offers the advantage that possible problems with suspended piece goods can be assessed separately as a result of displaceably beared side posts. It is not necessary to displace the entire side wall structure for that purpose.

In a preferred embodiment, the trailer comprises a front structure and an intermediate suspension system is beared on the front structure and on both side wall structures and/or side posts. By suspending piece goods at one or more different heights, the space in the trailer is used more efficiently.

In a preferred embodiment, the intermediate suspension system is beared on both side wall structures and/or side posts by means of telescopic tubes. This makes it possible to suspend the intermediate suspension system from the trailer and at the same time to open and close the side wall structures and/or side posts.

In a preferred embodiment, the intermediate suspension system and/or the telescopic tubes are stowable. This offers the economic advantage that the space in the trailer can also be used for non-suspended goods.

In a preferred embodiment, the side walls are provided with tarpaulin. This offers the advantage that the side walls are sealed in a lightweight, flexible and protective manner.

In a preferred embodiment, the roof is provided with a reinforced tarpaulin.

In a preferred embodiment, the tarpaulin concerns a side curtain. The side curtain is shiftable, such as in the case of curtainsider trailers. In an alternative preferred embodiment, the tarpaulin can be rolled up.

In a preferred embodiment, a suspension system is provided for loading wagons, which loading wagons comprise suspension means, shiftably suspended from the suspension system and suitable for carrying one or more piece goods.

In a preferred embodiment, the securing system is suitable for securing loading wagons.

In a preferred embodiment, the securing system concerns a rail, which rail comprises a series of grooves, which grooves are suitable for accommodating a securing pin of a loading wagon.

In a preferred embodiment, a docking pin is provided on the underside of the chassis at the rear of the trailer. This makes it possible to connect the trailer to a fifth wheel coupling of the assembly and/or production environment. In this way, it is possible to align and connect the suspension systems of the trailer to the suspension system of the assembly and/or production environment and thus to shift the piece goods between these environments and the trailer via loading wagons. In a preferred embodiment, this docking pin is suitable for engaging thereon, adjusting the height and thereby setting the trailer at an incline. In this way, it is possible to shift piece goods via loading wagons in a smoother manner under the influence of gravity or driven mechanically.

A second aspect of the present invention relates to a method for securing piece goods by means of loading wagons suspended in a trailer, wherein the securing is effected by moving the side wall structures and/or the side posts.

By a simple and straightforward movement of the side wall structures and/or side posts towards the trailer, the described volume of the trailer becomes smaller in order to be able to secure these goods after loading. Before unloading the trailer, the described volume of the trailer can be increased by moving the side wall structures and/or side posts away from the trailer. This provides a better, simpler and safer way of securing suspended piece goods.

In a preferred embodiment, the process of securing and/or unsecuring a series of loading wagons is subject to gravity. By, for example, selecting the angle between a suspension system with rails and the ground to be adjustable, it is possible to displace loading wagons under the influence of gravity. By using this technique when loading loading wagons into or out of the transporting means, this process is smoother and does not require manual intervention, which is more economical and user-friendly.

### FIGURES

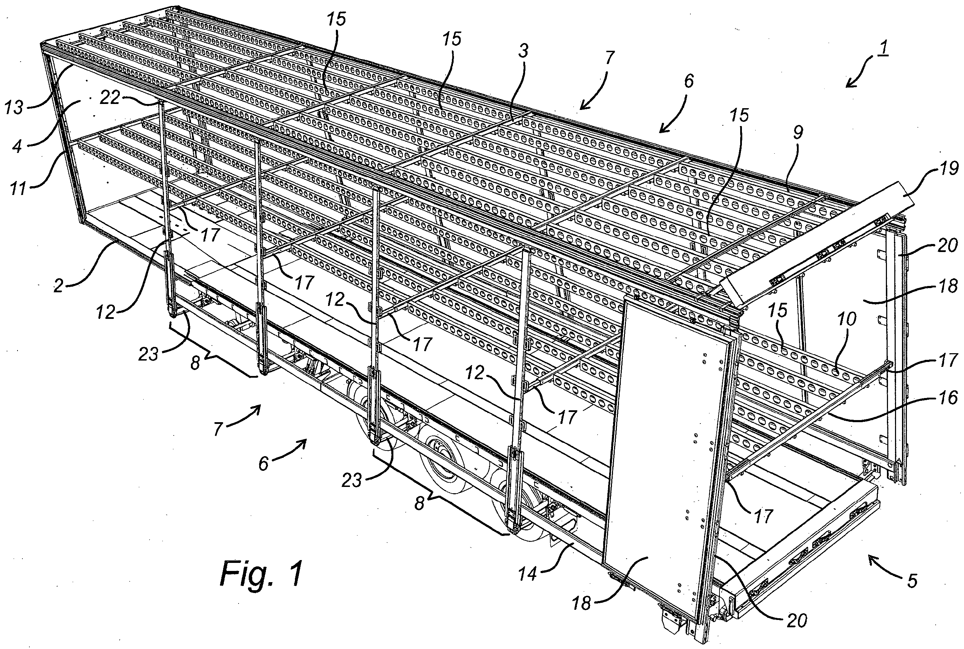

Figure 1 shows a bird's-eye view of the frame of an unloaded trailer (1) in the unsecured position, according to a preferred embodiment of the present invention. The trailer (1) is provided with a chassis (2), two side walls (6), a roof structure (3), a front structure (4) and a rear structure (5) (for example, rear doors (18)).

The side walls (6) comprise a side wall structure (7). The side wall structure (7) comprises side posts (12) which are beared on the roof (3) on the longitudinal bars (13) via hinges (22). These side posts (12) divide the side walls (6) into side wall segments (8). At the bottom, these side posts (12) are connected to one another by means of a side edge profile (14) and are also shiftably beared on the chassis (2) via a profile (23).

A suspension system (9) is provided on the roof (3). This comprises one or more suspension rails (15). Furthermore, an intermediate suspension system (10) is also provided. This comprises suspension rails (15) and also telescopic rail mounts (16) which are shiftably beared on the side posts (12) of the side wall structures (7) via telescopic tubes (17). The intermediate suspension system is also suspended from the front corner posts (11) of the front structure (4) of the trailer (1) and from the rear corner posts (20) of the rear structure (5).

On the rear structure (5) of the trailer (1), it is possible for two rear doors (18) to be hingeably beared on the side wall structures (7). A folding bar (19) is provided on the roof (3). The folding bar (19) makes it possible to allow or to obstruct access to the suspension rails (15) of the suspension system (9).

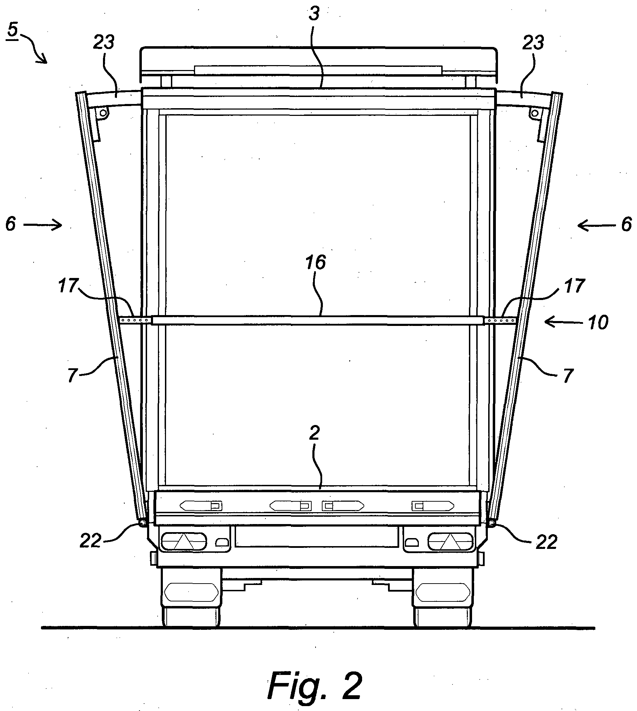

Figure 2 shows a rear view of a trailer (1) in the unsecured position, according to an alternative preferred embodiment of the invention. An intermediate suspension system (10) is provided which comprises telescopic rail mounts (16) which are shiftably beared on the side posts (12) of the side wall structures (7) via telescopic tubes (17). The side wall structures (7) are beared on the chassis (2) via hinges (22) and are also shiftably beared on the roof (3) of the trailer (1) via straight or curved profiles (23). In an alternative embodiment, these side wall structures (7) may also be shiftably beared on the roof (3) of the trailer (1) via straight profiles.

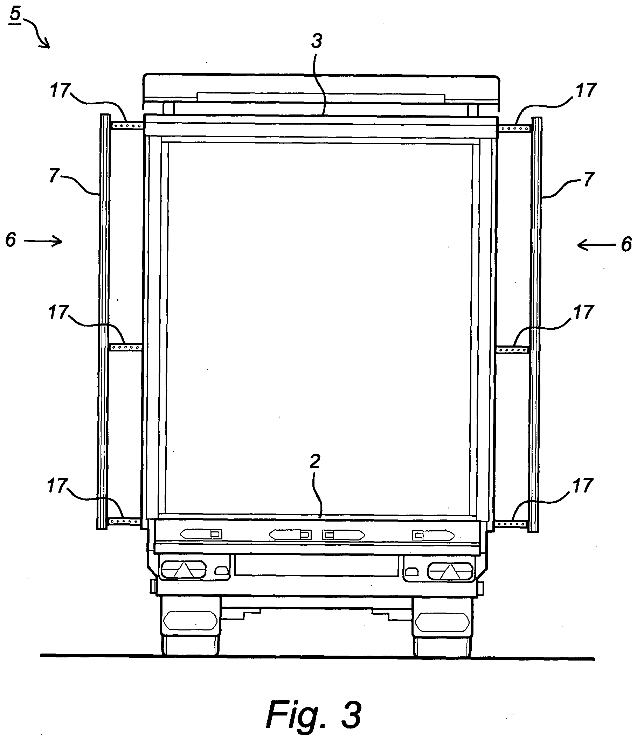

Figure 3 shows a rear view of a trailer (1) in the unsecured position, according to a further preferred embodiment of the invention. In this case, the side wall structures (7) are shiftably beared on both the chassis (2) and the roof (3) by means of telescopic tubes (17).

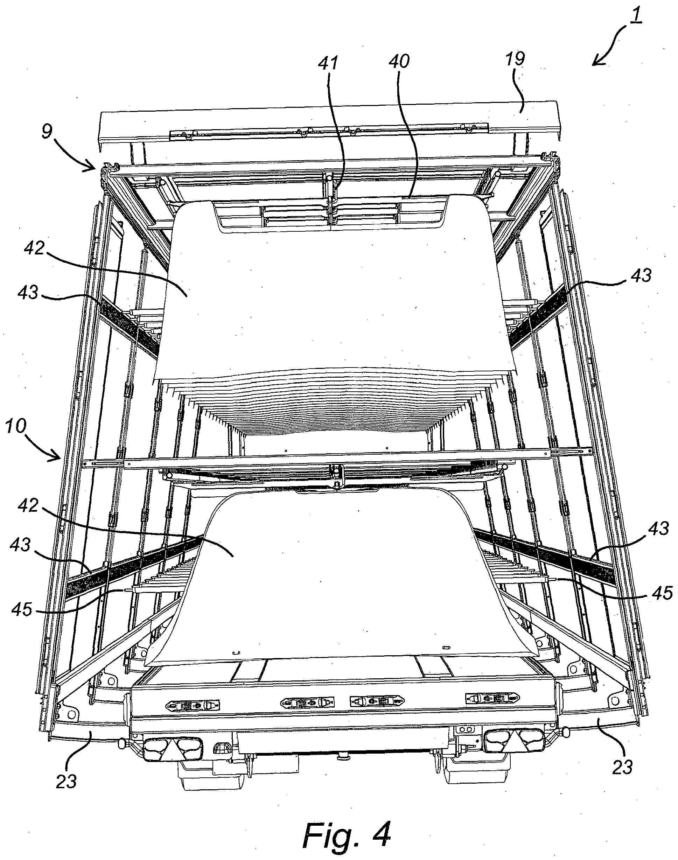

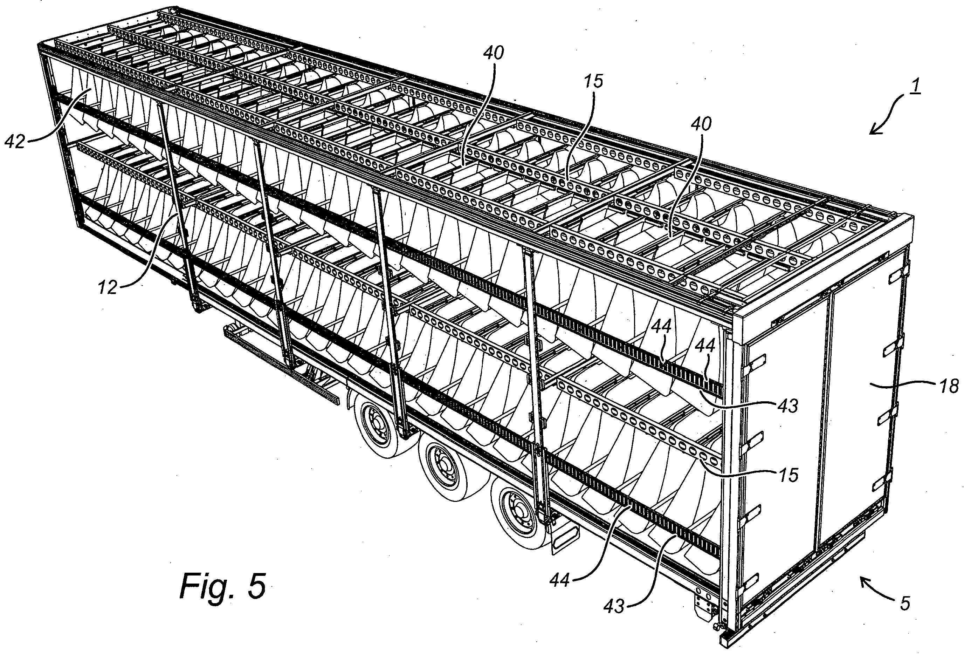

Figure 4 shows a rear view of a trailer in the unsecured position, loaded with piece goods, according to a preferred embodiment of the invention. Loading wagons (40) are suspended from both the suspension system (9) and the intermediate suspension system (10) via a suspension means (41). Each loading wagon (40) stores one item of piece goods (42), for example, a roof spoiler of a truck. Each side of the loading wagons (40) is provided with a securing pin (45), being a securing element (50). This is suitable for securing the loading wagon (40) to the side wall (6) which is provided with a securing rail (43). This securing rail (43) is provided with securing grooves (44) in order to accommodate the securing pins (45) and thus to secure the loading wagons (40) when the side walls (6) are closed. This is illustrated in Figure 5. This is a bird's-eye view of the same trailer in the secured position. All loading wagons (40) are secured in the trailer (1).

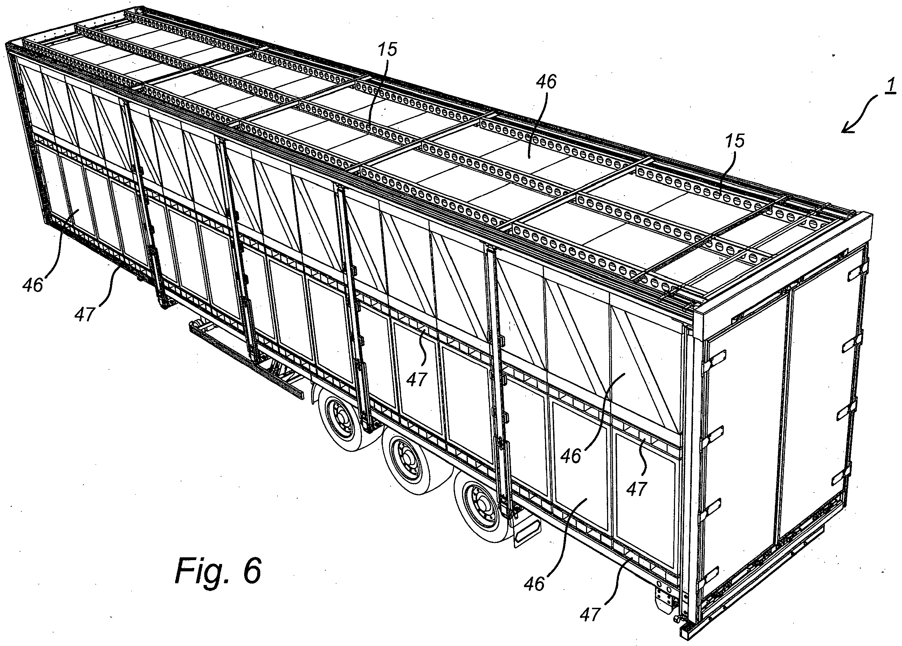

Figure 6 shows a bird's-eye view of the same trailer in the secured position, loaded with boxes or crates (46) on pallets (47). The intermediate suspension system (10), the securing rails (43) and the loading wagons (40), inter alia, are stowed compactly in a compartment in the front structure (4) of the trailer (1), in order to maximize the space inside the trailer for piece goods (42) which cannot be suspended, such as boxes or crates (46).

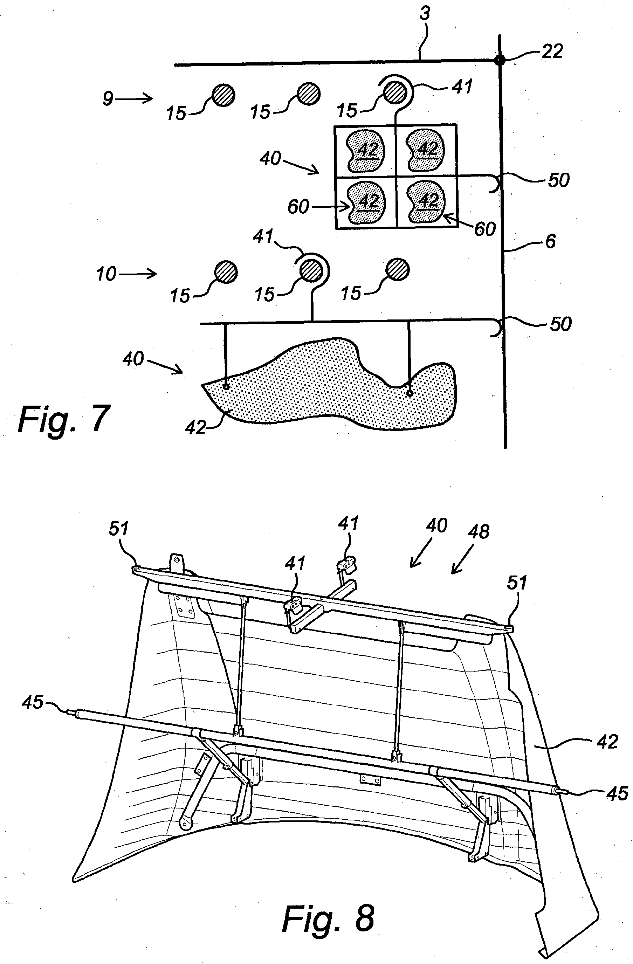

Figure 7 diagrammatically shows a cross-sectional view perpendicular to the longitudinal axis of a trailer (1) together with suspended loading wagons (40) according to a preferred embodiment of the invention. A loading wagon (40) can store, on the one hand, one single item of goods (42) and, on the other hand, several goods (42) in, for example, pouches (60). A loading wagon (40) is provided with suspension means (41) which are suitable for shiftably bearing the loading wagon (40) to a suspension system (9, 10) of a trailer (1). These loading wagons (40) are provided with a securing element (50) which is suitable for securing the loading wagons (40) to a side wall (6) of the trailer.

Figure 8 shows a foldable loading wagon (40) with a stored good (42) in an unfolded position (48). The loading wagon comprises suspension means (41), movement-limiting elements (51) and securing pins (45), being securing means (50).

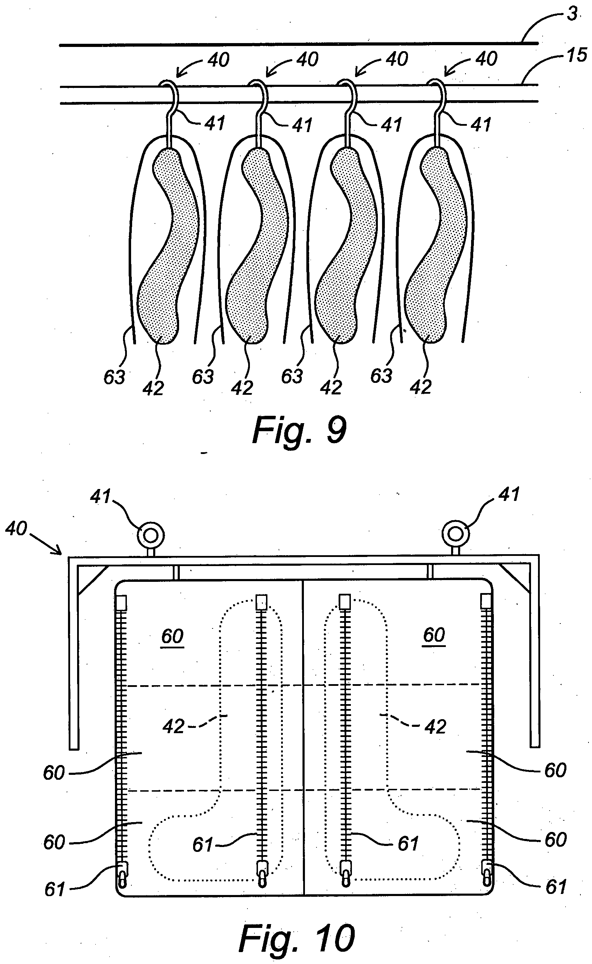

Figure 9 diagrammatically shows a cross-sectional view along the longitudinal axis of a trailer together with suspended loading wagons (40) according to a preferred embodiment of the invention. The loading wagons (40) store one single item of goods (42). A loading wagon (40) is provided with suspension means (41) which are suitable for shiftably bearing the loading wagon (40) to a rail (15) of the suspension system on the roof (3) of the trailer. The loading wagons (40) are provided with a protective flap (63) which protects the suspended product from external influences and as a result from nearby suspended products.

Figure 10 shows a universal loading wagon (40) with a possible good. The loading wagon comprises suspension means (41) and a pouch system. This pouch system comprises two compartments, each of which is subdivided into three flexible sections or pouches (60). It is possible to store goods (42) of different sizes, shapes or dimensions in the loading wagon by providing pouches which are suitable for storing various goods. In the figure, one item of goods is stored in the largest pouch (60) of each compartment. The loading wagon is provided with several zips (61) which provide access to the inside of the pouches. The bottom is preferably open. This prevents dirt and dust from accumulating inside the pouch system.

## Claims

1. Trailer (1) for transporting piece goods (42), which trailer is provided with a roof (3) and two side walls (6), which side walls (6) are provided with a tarpaulin and which side walls (6) comprise a side wall structure (7), wherein a suspension system (9) is provided on the roof (3) or on a side wall (6), which suspension system (9) is suitable for suspending piece goods (42) and for shifting said goods (42) in the longitudinal direction of the trailer (1), **characterized in that** the trailer (1) describes a volume which is variable as a result of the shiftable bearing of one or both side wall structures (7) and one or both side wall structures (7) are provided with a securing system for securing the piece goods (42).

2. Trailer (1) according to the preceding Claim 1, **characterized in that** one or both side wall structures (7) are hingeably beared on the roof (3) of the trailer (1).

3. Trailer (1) according to the preceding Claim 1, **characterized in that** one or both side wall structures (7) are shiftably beared on the roof (3) and/or on the chassis (2) of the trailer (1).

4. Trailer (1) according to the preceding Claim 1, **characterized in that** one or both side wall structures (7) are hingeably beared on the chassis (2) of the trailer (1).

5. Trailer (1) according to one of the preceding Claims 1-4, **characterized in that** a side wall structure (7) comprises side posts (12) which divide the side wall (6) into side wall segments (8).

6. Trailer (1) according to one of the preceding Claims 1-5, **characterized in that** the trailer (1) comprises a front structure (4), and **in that** an intermediate suspension system (10) is beared on the front structure (4) and on both side wall structures (7) and/or side posts (12).

7. Trailer (1) according to the preceding Claim 6, **characterized in that** the intermediate suspension system (10) is beared on both side wall structures (7) and/or side posts (12) by means of telescopic tubes (17).

8. Trailer (1) according to one of the preceding Claims 6 or 7, **characterized in that** the intermediate suspension system (10) and/or the telescopic profiles (17) are stowable.

9. Trailer (1) according to one of the preceding Claims 1-8, **characterized in that** the side walls (6) are provided with tarpaulin.

10. Trailer (1) according to the preceding Claim 9, **characterized in that** the tarpaulin concerns a side curtain.

11. Trailer (1) according to one of the preceding Claims 1-10, **characterized in that** a suspension system (9, 10) of the trailer (1) is provided with loading wagons (40), which loading wagons (40) comprise suspension means (41), are shiftably suspended from the suspension system (9, 10) and are suitable for carrying one or more piece goods (42).

12. Trailer (1) according to the preceding Claim 11, **characterized in that** the securing system concerns a rail (43), which rail (43) comprises a series of grooves (44), which grooves (44) are suitable for accommodating a securing pin (45) of a loading wagon (40).

13. Method for securing piece goods (42) by means of loading wagons (40) suspended in a trailer (1) according to one of the preceding Claims 1-12, **characterized in that** the securing is effected by moving the side wall structures (7) and/or the side posts (12).

## Patentansprüche

1. Trailer (1) zum Transport von Stückgut (42), welcher Trailer mit einem Dach (3) und zwei Seitenwänden (6) versehen ist, welche Seitenwände (6) mit einer Plane versehen sind und welche Seitenwände (6) eine Seitenwandstruktur (7) umfassen, wobei ein Aufhängungssystem (9) an dem Dach (3) oder an einer Seitenwand (6) vorgesehen ist, welches Aufhängungssystem zum Aufhängen von Stückgut (42) und zum Verschieben der Güter (42) in der Längsrichtung des Trailers (1) geeignet ist, **dadurch gekennzeichnet, dass** der Trailer (1) ein Volumen beschreibt, das variabel ist, durch die verschiebbare Lagerung von einer oder beider Seitenwandstrukturen (7) und eine oder beide Seitenwandstrukturen (7) mit einem Sicherungssystem zur Sicherung der Stückgüter (42) versehen sind.

2. Trailer (1) nach dem vorhergehenden Anspruch 1, **dadurch gekennzeichnet, dass** eine oder beide Seitenwandstrukturen (7) scharnierbar an dem Dach (3) des Trailers (1) gelagert sind.

3. Trailer (1) nach dem vorhergehenden Anspruch 1, **dadurch gekennzeichnet, dass** eine oder beide Seitenwandstrukturen (7) verschiebbar an dem Dach (3) und/oder an dem Fahrgestell (2) des Trailers (1) gelagert sind.

4. Trailer (1) nach dem vorhergehenden Anspruch 1, **dadurch gekennzeichnet, dass** eine oder beide Seitenwandstrukturen (7) scharnierbar an dem Fahrgestell (2) des Trailers (1) gelagert sind.

5. Trailer (1) nach einem der vorhergehenden Ansprüche 1-4, **dadurch gekennzeichnet, dass** eine Seitenwandstruktur (7) Seitenpfosten (12), die die Seitenwand (6) in Seitenwandsegmente (8) unterteilen, umfasst.

6. Trailer (1) nach einem der vorhergehenden Ansprüche 1-5, **dadurch gekennzeichnet, dass** der Trailer (1) eine Frontstruktur (4) umfasst, und dass ein Zwischenaufhängungssystem (10) an der Frontstruktur (4) und an beiden Seitenwandstrukturen (7) und/oder Seitenpfosten (12) gelagert ist.

7. Trailer (1) nach dem vorhergehenden Anspruch 6, **dadurch gekennzeichnet, dass** das Zwischenaufhängungssystem (10) an beiden Seitenwandstrukturen (7) und/oder Seitenpfosten (12) mittels Teleskoprohre (17) gelagert ist.

8. Trailer (1) nach einem der vorhergehenden Ansprüche 6 oder 7, **dadurch gekennzeichnet, dass** das Zwischenaufhängungssystem (10) und/oder die teleskopischen Profile (17) verstaubar sind.

9. Trailer (1) nach einem der vorhergehenden Ansprüche 1-8, **dadurch gekennzeichnet, dass** die Seitenwände (6) mit einer Plane versehen sind.

10. Trailer (1) nach dem vorhergehenden Anspruch 9, **dadurch gekennzeichnet, dass** die Plane einen Seitenplane betrifft.

11. Trailer (1) nach einem der vorhergehenden Ansprüche 1-10, **dadurch gekennzeichnet, dass** ein Aufhängungssystem (9, 10) des Trailers (1) mit Ladewagen (40) versehen ist, welche Ladewagen (40) Aufhängungsmittel (41) umfassen, verschiebbar von dem Aufhängungssystem (9, 10) aufgehängt sind und zum Tragen eines oder mehrerer Stückgüter (42) geeignet sind.

12. Trailer (1) nach dem vorhergehenden Anspruch 11, **dadurch gekennzeichnet, dass** das Sicherungssystem eine Schiene (43) umfassend eine Reihe von Spuren (44) umfasst, welche Spuren (44) zur Aufnahme eines Sicherungsstiftes (45) eines Ladewagens (40) geeignet sind.

13. Verfahren zur Sicherung von Stückgut (42) mittels in einem Trailer (1) aufgehängten Ladewagen (40) nach einem der vorhergehenden Ansprüche 1-12, **dadurch gekennzeichnet, dass** die Sicherung durch Bewegen der Seitenwandstrukturen (7) und/oder der Seitenpfosten (12) bewerkstelligt wird.

## Revendications

1. Remorque (1) pour transporter des marchandises en pièces (42), laquelle remorque est munie d'un toit (3) et de deux parois latérales (6), lesquelles parois latérales (6) sont munies d'une bâche et lesquelles parois latérales (6) comprennent une structure de paroi latérale (7), dans laquelle un système de suspension (9) est prévu au toit (3) ou à une paroi latérale (6), lequel système de suspension (9) est adapté pour suspendre des marchandises en pièces (42) et pour le déplacement desdites marchandises (42) dans la direction longitudinale de la remorque (1), **caractérisé en ce que** la remorque (1) décrit un volume qui est variable en raison du support déplaçable d'une ou des deux structures de paroi latérale (7) et une ou les deux structures de paroi latérale (7) sont munies d'un système de sécurisation pour sécuriser les marchandises en pièce (42).

2. Remorque (1) selon la revendication précédente 1, **caractérisée en ce que** l'une ou les deux structures de paroi latérale (7) sont supportées de manière articulée au toit (3) de la remorque (1).

3. Remorque (1) selon la revendication précédente 1, **caractérisée en ce que** une ou les deux structures de paroi latérale (7) sont supportées de manière déplaçable au toit (3) et/ou au châssis (2) de la remorque (1).

4. Remorque (1) selon la revendication précédente 1, **caractérisée en ce qu**'une ou les deux structures de paroi latérale (7) sont supportées de manière articulée au châssis (2) de la remorque (1).

5. Remorque (1) selon l'une quelconque des revendications précédentes 1-4, **caractérisée en ce qu**'une structure de paroi latérale (7) comprend des montants latéraux (12) qui divisent la paroi latérale (6) en segments de paroi latérale (8).

6. Remorque (1) selon l'une quelconque des revendications précédentes 1-5, **caractérisée en ce que** la remorque (1) comprend une structure avant (4), et **en ce qu'**un système de suspension intermédiaire (10) est porté sur la structure avant (4) et aux structures de paroi latérale (7) et/ou les montants latéraux (12).

7. Remorque (1) selon la revendication précédente 6, **caractérisée en ce que** le système de suspension intermédiaire (10) est supporté aux deux structures de paroi latérale (7) et/ou les montants latéraux (12) au moyen de tubes télescopiques (17).

8. Remorque (1) selon l'une quelconque des revendications précédentes 6 ou 7, **caractérisée en ce que** le système de suspension intermédiaire (10) et/ou les profilés télescopiques (17) peuvent être rabattues.

9. Remorque (1) selon l'une quelconque des revendications précédentes 1 à 8, **caractérisée en ce que** les parois latérales (6) sont munies d'une bâche.

10. Remorque (1) selon la revendication précédente 9, **caractérisée en ce que** la bâche concerne un rideau latéral.

11. Remorque (1) selon l'une quelconque des revendications précédentes 1-10, **caractérisée en ce qu**'un système de suspension (9, 10) de la remorque (1) est pourvu de wagons de chargement (40), lesquels wagons de chargement comprennent des moyens de suspension (41), sont suspendus de manière déplaçable à partir du système de suspension (9, 10) et sont adaptés pour transporter une ou plusieurs marchandises en pièces (42).

12. Remorque (1) selon la revendication précédente 11, **caractérisée en ce que** le système de sécurisation concerne un rail (43), lequel rail (43) comprend une série de rainures (44), lesquelles rainures (44) sont adaptées pour recevoir une tige de sécurisation (45) d'un wagon de chargement (40).

13. Procédé pour la sécurisation de marchandises en pièces (42) au moyen de wagons de chargement (40) suspendus dans une remorque (1) selon l'une quelconque des revendications précédentes 1-12, **caractérisé en ce que** la sécurisation est réalisée par déplacement des structures de paroi latérale (7) et/ou des montants latéraux (12).
